# EUROPEAN PATENT APPLICATION

(11) **EP 4 660 447 A1**
(43) Date of publication of application: **10.12.2025**
(21) Application number: 24180209.9
(22) Date of filing: 05.06.2024
(51) Int. Cl.: F03D 1/06

(54) **METHODS AND ASSEMBLIES FOR INSTALLING BUSHINGS IN THE ROOT OF A WIND TURBINE BLADE**

(71) Applicant: LM Wind Power A/S, 6000 Kolding (DK)
(72) Inventor: THUESEN, Jesper, 6000 Kolding (DK); VINDING, Kjeld, 6000 Kolding (DK)
(74) Representative: Bardehle Pagenberg S.L.

(57) **Abstract**

The present disclosure relates to methods (40) and assemblies for installing a bushing (50) in a root (16) of a wind turbine blade (10). The present disclosure further relates to methods (40) and assemblies for replacing a bushing of a wind turbine blade (10). A method (40) comprises providing (41) a bushing hole (51); inserting (42) a bushing (50) wrapped in a reinforcement fabric (52) in the hole (51), the bushing (50) being closed at a tip end portion. The method (40) further comprises creating (43) vacuum in the hole (51), infusing (44) the reinforcement fabric (52) with resin, and curing the resin.

## Description

### FIELD

The present disclosure relates to wind turbine blades and to the roots or root portions of such blades. The present disclosure more particularly relates to methods and assemblies for installing bushings in a root of a wind turbine blade. The present disclosure also relates to repairing a root portion of a wind turbine blade, and particularly to replacing one or more bushings in the blade root.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation generates a torque that is normally transmitted through a rotor shaft to a generator, either directly ("directly driven" or "gearless") or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

Wind turbine blades are usually made of composite materials. For example, reinforcing fibers such as glass fibers or carbon fibers may be covered or embedded in resin in a mold and then cured for forming blade shells, e.g. an upwind half shell for the pressure side and a downwind half shell for the suction side. The two half shells may then be joined to form the entire blade shell. In other examples, an entire blade shell may be formed in a single step, e.g. a single mold may be used to manufacture the blade shell, without the need to join two blade half shells.

The composite materials of wind turbine blades may not have sufficient structural integrity to provide a safe and strong attachment to the hub on its own, and therefore the blade root may include a metal blade flange, and bushings are usually arranged at the blade root. The root of the wind turbine blade may include a plurality of bushings embedded in a rim of the root, the bushings extending in a root-tip direction of the blade and having a thread. Fasteners such as bolts or studs may be used to secure the blade to the hub, or to a pitch bearing arranged with the hub. Sometimes, an extender may additionally be arranged between the blade and the hub, e.g. between the blade and the pitch bearing.

The wind turbine blades may deteriorate or get damaged during the lifetime of a wind turbine. For example, wind forces and vibrations may weaken a wind turbine blade. It can happen that in specific wind farms, wind has been more turbulent than expected, or more storms have occurred and thus that generally loads have been higher than expected. The largest bending loads on the blades generally occur in the root portion and specifically at the attachment to the hub (pitch bearing).

The large weight of the wind turbine blades (a wind turbine blade may weigh tens of tons, e.g. 30, 40, 50 tons or more) may also increase the risk of damage to the blade. Excessively high or excessively low temperatures and humidity may also deteriorate a wind turbine blade. If protection against lightning strikes fails or is insufficient, the electrical current can damage the blade. Also, undesired defects arising during the process of blade manufacturing may cause vulnerabilities in the wind turbine blade.

It has been observed that the bushings in the blade root and/or the blade laminate around them may get damaged. For example, cracks around the bushings may develop during the lifetime of the blade. If the cracks continue to grow, the bushings can end up loosening from the surrounding composite material to a certain extent, which ultimately could even cause blade disengagement from the hub.

When damage to the bushings and/or the surrounding laminate is detected, the blade root can be repaired. Depending on the gravity of the situation the blade root has to be repaired. Examples of the present disclosure aim specifically at repairing a wind turbine blade root in an effective and timely manner.

### SUMMARY

In an aspect of the present disclosure, a method for installing a bushing in a root of a wind turbine blade is provided. The method comprises providing a bushing hole extending in a longitudinal direction and having an open end and a closed end. The method further comprises inserting a bushing in the bushing hole. The bushing has a receiving end for receiving a fastener and a tip end and is wrapped in a reinforcement fabric. The bushing is closed at or near a tip end of the bushing. The method further comprises creating a vacuum in the bushing hole and infusing the reinforcement fabric with resin and curing the resin.

According to this aspect, a hole for a bushing is provided. A bushing that is closed at its tip portion is introduced into the bushing hole. The bushing is wrapped in a reinforcement fabric, and vacuum assisted infusion can then be used to fill the bushing hole. The reinforcement fabric is thereby impregnated with resin, which is then cured. The bushing is therefore secured in the bushing hole. The closed tip portion of the bushing avoids resin entering an inside of the bushing.

The reinforcement fabric may be understood as fabric suitable for vacuum infusion, specifically resin infusible material. The reinforcement fabric reinforces the resin. Reinforcement fabric may e.g. be fiber glass. Reinforcement fabric may e.g. be provided as one or more fiber mats, or fiber rovings.

This method may be specifically suitable for repairing a damaged bushing and/or damaged laminate around the bushing. In such a case, the hole for the bushing may be provided by removing a previous bushing. In examples, the hole for the bushing may be provided by drilling out the previous bushing.

Throughout the present disclosure, a bushing may be regarded as an insert having an internal thread, wherein the internal thread allows coupling with a threaded fastener, such as bolt or stud. Such bushings may also be referred to as "threaded bushings" or "threaded inserts".

Throughout the present disclosure a vacuum may be regarded as a level of pressure that is lower than ambient pressure, specifically considerably lower than ambient pressure.

Throughout the present disclosure, the bushing being "wrapped" in reinforcement fabric may be regarded as the bushing being at least partially surrounded by the fabric. The fabric may be held in place by itself, or may otherwise be joined to the bushing e.g. using adhesive.

In a further aspect of the present disclosure, an assembly for installing, e.g. replacing, a bushing in a root of a wind turbine blade is provided. The assembly comprises a bushing wrapped in a reinforcement fabric, a support comprising a through hole and an alignment pin configured to be inserted in the through hole and in the bushing such that the bushing is centered in a bushing hole.

### BRIEF DESCRIPTION OF THE DRAWINGS

Figure 1 illustrates a perspective view of an example of a wind turbine;
Figure 2 illustrates a perspective view of an example of a wind turbine blade;
Figure 3 schematically shows a flow chart of an example of a method for installing a bushing in a root of a wind turbine blade;
Figure 4 schematically illustrates an enlarged perspective view of an example of a root of a wind turbine blade root with tubes for vacuum infusing a plurality of assemblies of replacement bushing - reinforcement fabric;
Figure 5 schematically illustrates an enlarged cross-sectional view of the root of figure 4; and
Figure 6 schematically illustrates an example of a tip centering element for centering a tip of a replacement bushing inside the corresponding replacement hole.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

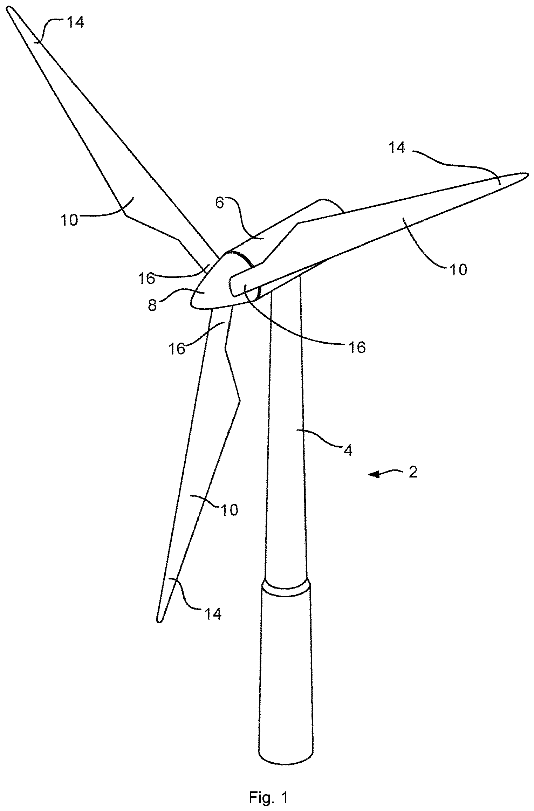

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

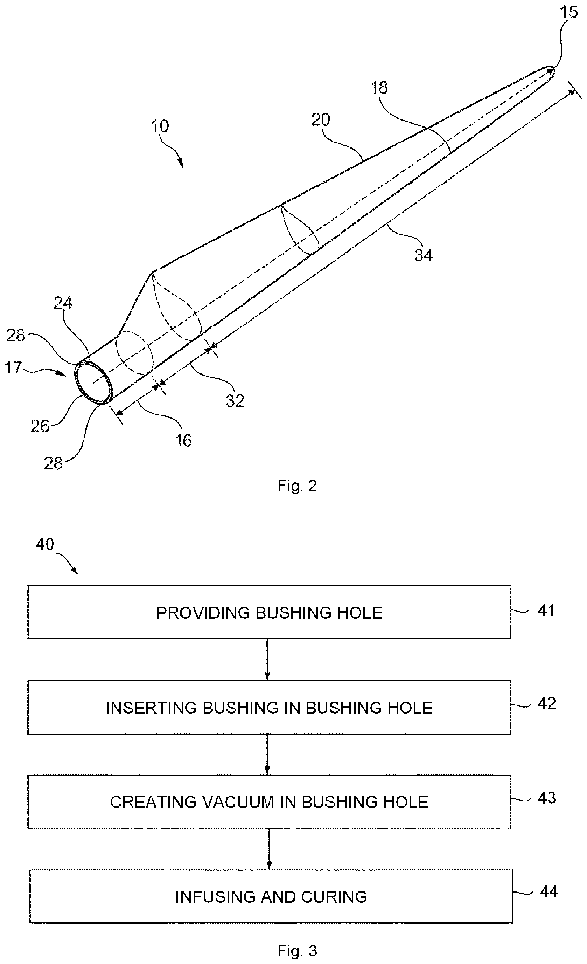

Fig. 2 shows a schematic view of an exemplary wind turbine blade 10. The wind turbine blade 10 has the shape of a conventional wind turbine blade with a root end 17 and a tip end 15 and comprises a root region 16 closest to the hub, a profiled or an airfoil region 34 furthest away from the hub and a transition region 32 between the root region 16 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34, also called the profiled region, has an ideal or almost ideal blade shape with respect to generating lift, whereas the root region 16, due to structural considerations, has a substantially circular or elliptical cross-section, which for instance makes it easier and safer to mount the blade 10 to the hub. The diameter (or the chord) of the root region 16 may be constant along the entire root area 16. The transition region 32 has a transitional profile gradually changing from the circular or elliptical shape of the root region 16 to the airfoil profile of the airfoil region 34. The chord length of the transition region 32 typically increases with increasing distance from the hub. The airfoil region 34 has an airfoil profile with a chord extending between the leading edge 18 and the trailing edge 20 of the blade 10. The width of the chord decreases with increasing distance from the hub.

A shoulder of the blade 10 is defined as the position where the blade 10 has its largest chord length. The shoulder is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

Wind turbine blade 10 may comprise a blade shell comprising two blade shell parts or half shells, a first blade shell part 24 and a second blade shell part 26, typically comprising fiber-reinforced polymer, e.g. glass fiber composite. In other examples, the wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 have a semi-circular outer cross-sectional shape.

In an aspect of the present disclosure, a method for installing a bushing in a root of a wind turbine blade is provided. Figure 3 schematically illustrates an example of the method for inserting a bushing in a blade root in a flowchart. The method 40 comprises, at block 41, providing a bushing hole extending in a longitudinal direction and having an open end and a closed end.

In some examples, providing the bushing hole may comprise removing a bushing from root 16 and leaving the hole having the open end and the closed end, specifically by drilling out the previous bushing. In such a case, the method may be regarded as a method for repairing a wind turbine blade or as a method for replacing one or more bushings.

The bushing hole may extend substantially parallel to a longitudinal axis of the blade root, and therefore of the blade. The method further comprises, at block 42, inserting a bushing, e.g. a replacement bushing in the bushing hole. The bushing has a receiving end for receiving a fastener and a tip end. The bushing is wrapped in a reinforcement fabric.

The bushing is closed at or near a tip end of the bushing. For example, the bushing itself (i.e. the sleeve of the bushing) can be closed, or the sleeve of the bushing can be open at the tip end and the bushing comprises a stopper closing the tip end of the bushing. I.e., the tip end portion of the bushing is closed such that resin cannot advance through an inside of the bushing. The method further comprises, at blocks 43 and 44, creating a vacuum in the bushing hole, and infusing the reinforcement fabric with resin and curing the resin.

Examples of the method may be particularly suitable for repair of one or more bushings. During operation of the wind turbine, the bushing of a root of a wind turbine blade may become damaged and/or a root portion of the laminate surrounding the bushing may become damaged and show cracks. The bushing may be replaced with a new one in an effective and timely manner. If the laminate around the bushing is damaged, e.g. comprises cracks, this portion may be removed and replaced with new material.

In particular examples, an existing bushing and surrounding laminate may be drilled out to create the bushing hole. Before removing the bushing, the wind turbine blade including the bushing may be removed from the wind turbine and lowered to the ground. For example, a crane may be used to lower the wind turbine blade. The root of the wind turbine blade may be repaired at ground level, e.g. at or near a wind farm if onshore, or on a deck of a vessel or a barge if offshore.

Examples of the above method may however also be used to install a bushing for the first time, i.e. prior to operation of the wind turbine blade.

In the following, it will be assumed that method 40 is a repair method, and therefore the bushing is a replacement bushing, and the bushing hole is a replacement hole. As mentioned, this is an option, but not the only option, as the method may be used to install one or more bushings for the first time as well.

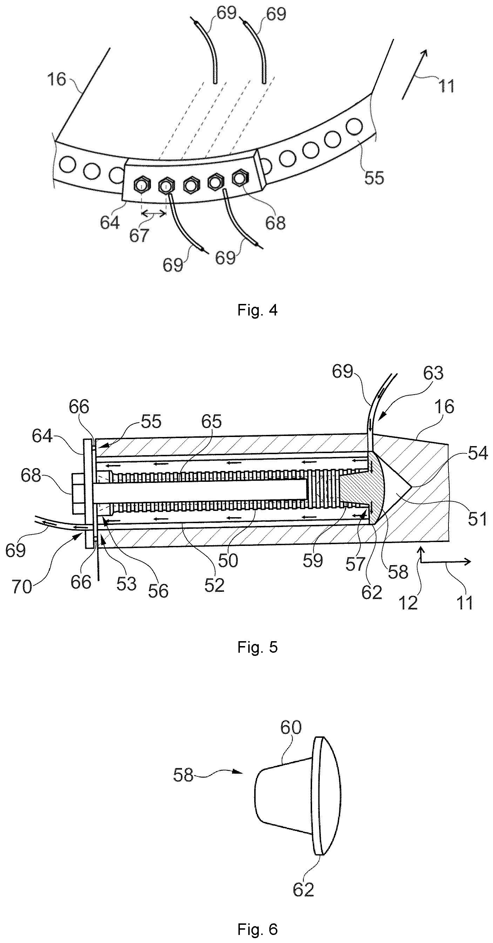

Figure 5 schematically illustrates an enlarged cross-sectional view of root 16 of a wind turbine. The cross-section includes a longitudinal direction 11 of the blade 10 and a radial direction 12 of the blade.

In the example of figure 5, the old bushing has been removed and the replacement bushing 50 has been positioned in the replacement hole 51. There is a radial gap between the replacement bushing 50 and an inside wall of the hole 51. Part of the radial gap is occupied by reinforcement fabric 52. In other words, in a cross-section perpendicular to the longitudinal direction of the blade 10, a diameter of the provided replacement hole 51 may be larger than the diameter of the old bushing, and of the new bushing, and also larger than the diameter of the assembly replacement bushing 50 - reinforcement fabric 52.

Removing composite material surrounding the old bushing may facilitate removing the old bushing as well as easily inserting the replacement bushing 50 - reinforcement fabric 52 assembly in the created replacement hole 51. As mentioned before, the bushing and surrounding composite material may be drilled out at the same time.

The replacement hole 52 has an open end 53 and a closed end 54. I.e., the replacement hole 51 is a blind hole. The closed end 54 is closer to the blade tip than to the root end 55. The replacement hole 51 may specifically extend along the longitudinal direction 11 of the blade, i.e. in a root-tip direction of the blade.

The replacement bushing 50 similarly comprises a receiving end 56 and a tip end 57. Once inserted, the tip end 57 of the replacement bushing 50 is closer to the closed end 54 of the replacement hole 51 than the receiving end 56. In some examples, at least a portion of the tip end 57 of the replacement bushing 50 may touch the closed end 54 of the replacement hole 51.

The reinforcement fabric 52 may surround the replacement bushing 50 completely along a circumferential direction of the bushing 50. Also, the reinforcement fabric 52 may completely cover the replacement bushing 50 along the longitudinal direction of the bushing 50. I.e., the reinforcement fabric 52 may surround a radial outer face of the bushing 50 and may extend between the receiving end 56 and the tip end 57 of the bushing 50. In other examples, only part of the length of the bushing 50 may be covered by the reinforcement fabric.

The reinforcement fabric 52 may be fiberglass in some examples. Other suitable reinforcement fabrics including e.g. carbon fiber or aramid fiber, can also be used. The reinforcement fabric 52 may be provided as one or more fiber mats or layers of fiber cloth in some examples. The fiber mats or cloths may be woven or non-woven.

In examples, the tip portion of the bushing 50 may be closed. I.e., the sleeve itself is closed.

In the illustrated example, a tip portion of the replacement bushing 50, i.e. a portion of the sleeve may be open at the tip end 57 and may include a separate stopper 59, i.e. a stopper separate from the bushing, closing the tip end of the bushing 50.

A stopper 59 may be provided inside the tip end portion of the replacement bushing 50 to avoid resin entering the bushing later on. The stopper 59 may comprise rubber or foam. For example, the stopper 59 may be made of rubber.

The stopper 59 may e.g. be press-fitted into the tip end portion of the replacement bushing 50. In alternative examples, the stopper may include an outer thread configured to mate with the inner thread of the bushing.

Securing the stopper 59 in the replacement bushing 50 may e.g. be performed after surrounding the bushing 50 with the reinforcement fabric 52, although in other examples, the stopper 59 may be arranged in the tip portion of the bushing 50 first, and then the bushing 50 may be surrounded with the reinforcement fabric 52.

The stopper 59 may comprise a gasket. In some examples, the stopper 59 may have a shape of a truncated cone.

The replacement bushing 50 may comprise a tip centering element 58 connected at the tip end 57 of the replacement bushing 50 for centering the tip end portion of the replacement bushing 50 in the bushing hole 51. In some examples, the stopper 59 and the tip centering element 58 may be provided as a single same element which performs both functions at the same time.

In other examples, the tip centering element 58 may be different and separate from the stopper 59. When arranged in the replacement bushing 50, the tip centering element 58 may touch the stopper 59.

Figure 6 schematically illustrates a side view of an example of a tip centering element 58 for centering the tip of the replacement bushing 50 inside the replacement hole 51. The tip centering element 58 may comprise a plug 60 and a flange 62, e.g. a circumferential flange. The plug 60 may be arranged within the replacement bushing 50, specifically inside its tip portion, and may function as a stopper in some examples. When bushing 50 is inside the replacement hole 51, the circumferential flange 62 is arranged outside of the bushing 50.

When inserting the replacement bushing 50 - reinforcement fabric 52 assembly, the circumferential flange 62 may help to center the tip end of the bushing 50 in the bushing hole and keep it centered. An outer diameter of the circumferential flange 62 may be the same or similar to an inner diameter of the replacement hole 51. For example, if the centering element 58 comprises, e.g. is made of foam or rubber or other resilient material, the outer diameter of the circumferential flange 62 may be slightly larger than the inner diameter of the replacement hole 51.

The circumferential flange 62 may include one or more holes and/or recesses for allowing a flow of resin afterwards. The circumferential flange 62 may comprise one or more cut-outs or recesses extending along the longitudinal direction 11 of the blade such that resin may flow in this direction through the holes or recesses. The tip centering element 58 may also comprise one or more channels or through holes for allowing the flow of resin in the radial direction 12 of the blade, e.g. from a radial region of the replacement hole 51 to another radial region of the replacement hole 51.

The tip centering element 58 may be mushroom shaped in some examples as illustrated in figure 6.

In relation with figure 5, a method for resin infusion and curing is illustrated. The same or similar methods may be used in other embodiments of the present disclosure. In examples of the present disclosure, creating a vacuum may comprise providing a channel 63 from an outside of the blade to the bushing hole. The channel 63 provided may be used for creating vacuum in some of the examples or for the introduction of resin. In examples, channel 63 may e.g. be provided after removing the old bushing and before inserting 42 the replacement bushing 50 with the reinforcement fabric 52. A tube 69 may be introduced in channel 63 for introducing resin or for removing air.

Channel 63 may extend between the outside of the blade root and a tip end portion of the replacement hole 51, e.g. a portion adjacent the closed end 54 of the hole, see e.g. figure 5. Channel 63 may extend substantially transverse to the longitudinal direction. Specifically, the channel 63 may be provided in the radial direction 12 of the blade. Channel 63 may be provided in different positions and/or orientations in other examples.

The method 40 may further comprise connecting, e.g. attaching, a support 64 at the blade root 16, specifically at an end face of the blade root, and coupling the bushing 50 to the support 64, see figures 4 and 5. This may help to "center" the bushing 50. The support 64 may be a plate in some examples. The support 64 may follow a curvature of the root in a cross-section perpendicular to the longitudinal direction 11 of the blade.

Centering the replacement bushing 50 may help to ensure a correct attachment between the blade and the hub later on. It should be noted that, throughout this disclosure, "centering" the replacement bushing does not necessarily imply that a distance between the outer surface of the bushing 50 with the reinforcement fabric 52 and the internal wall of the hole 51 where the bushing is arranged is exactly the same along the circumferential direction of the bushing 50 with the reinforcement fabric 52. "Centering" herein refers to the fact the bushing 50 is positioned such that attachment between the blade and the hub may be properly performed later on. For example, the replacement bushing 50 may be positioned such that its position is the same as, or at least rather close to, the position of the old bushing.

The support 64 may include a through hole for receiving an alignment pin or rod 65, see figure 5. An outer diameter of the alignment pin 65 may be slightly smaller than the inner diameter of the replacement bushing 50. In this manner, the alignment pin 65 may be inserted into the replacement bushing 50. In other words, at least a portion of the replacement bushing 50 surrounds at least a portion of the alignment pin 65.

Centering may therefore comprise introducing the alignment pin 65 in the through hole of the support 64 and in the replacement bushing 50.

In some other examples, the replacement bushing 50 may be inserted first, without the alignment pin 65. Then, support 64 may be connected to the root 16, and the alignment pin 65 may then be introduced into the corresponding through hole and into the replacement bushing 50.

In other examples, the support 64 with a previously mounted alignment pin 65 may be used and approach the blade root.

In yet further examples, the alignment pin 65 may first be introduced in the inner channel of the replacement bushing 50, and the bushing 50 with the inserted alignment pin 65 may be introduced into the replacement hole 51 in the blade root. Then, the support 64 may be connected to the root 16, e.g. such that a through hole of the support 64 is slid on the alignment pin 65. The interaction between the through hole and the alignment pin 65 positions the bushing 50 suitably inside the replacement hole 51. The replacement bushing 50 may specifically occupy the position occupied by the previous old bushing which was removed or a similar position.

The support 64 may comprise one or more gaskets or rubbers 66 for sealing the bushing or replacement hole such that a vacuum may be performed in the replacement hole 51. The support 64 may be mounted on the blade root in any suitable manner. In some examples, the blade of the support 64 may resemble a portion of a blade flange.

The support 64 may comprise a plurality of through holes which are arranged to align with multiple bushings of the blade. In the example of figure 4, the support 64 comprises five through holes. The plurality of through holes may follow the curvature of the blade root 16 (in a cross-section perpendicular to the longitudinal direction 11 of the blade). The pitch 67 of the through holes, i.e. the distance between the centers of two adjacent through holes, may match a desired pitch between installed bushings. For example, the desired pitch may be the pitch between old bushings 50. For example, a pitch (and curvature) of the through holes of support 64 may enable to position the replacement bushing 50 at the position previously occupied by the old bushing or at a similar position such that subsequent attachment of the blade and the hub may effectively be performed.

In some examples, the support 64 may include at least three holes. Two of the holes may be used for centering with two old bushings present in the root, such that the third hole is positioned correctly with respect to the replacement hole 51. Centering the replacement bushing 50 may be more effectively performed if the support 64 comprises at least three holes. Additionally or alternatively, the inner and/or outer curvature of the inner and outer (radial) walls of the root may be used to position a hole of the support 64 correctly with respect to the corresponding replacement hole 51.

The method may further comprise attaching the alignment pin 65 to the support 64. This attachment may help to ensure that the position of the replacement bushing 50 is suitably maintained during the process of vacuum infusion. The tip centering element 58, for example its circumferential flange 62, may also contribute to keeping the replacement bushing 50 in a suitable position.

The attachment may for example be performed with a nut 68. The alignment pin 65 may protrude beyond the support 64 when the support 64 is connected, e.g. removably attached, to the blade root 16. The nut 68 may be arranged on this free end of the alignment pin 65. Five nuts 68 are used in the example of figure 4. Other suitable fasteners may also be used.

In order to perform vacuum infusion, an input tube and an output tube may be provided. Tubes 69 are shown in figures 4 and 5. A tube 69 has been arranged in channel 63 provided in the blade root 16 connecting an outside of the blade root 16 and the replacement hole 51, see figure 5. This tube may serve as an input tube (for introducing the resin) or as an output tube (vacuum outlet).

Another tube may e.g. be inserted through an auxiliary through hole 70 of the support 64. In other examples, such a further channel may be provided in the blade root 16, e.g. close to the root end. Similarly, tube 69 arranged in the auxiliary through hole 70 (or a further channel) may be used as an input or as an output tube. In the example of figures 4 and 5, the tube inserted in the auxiliary through hole 70 is used as an output tube whereas the tube inserted in the provided channel 63 is used as an input tube.

In other examples, the support 64 may comprise two or more auxiliary through holes 70. One of these holes may be used as an input and one of the holes may be used as an output for the vacuum infusion process. For example, resin may flow into the replacement hole 51 through one of these holes, and resin may flow out of the replacement hole 51 through another one of these holes after substantially filling the bushing hole.

Therefore, when the replacement bushing 50 with the reinforcement fabric 52 is suitably arranged within the replacement hole 51, a suitable vacuum may be generated in the replacement hole 51. Then, resin may be introduced in the replacement hole 51. The resin may impregnate the reinforcement fabric 52 and fill a radial gap between the reinforcement fabric 52 and the inner wall of the replacement hole 51. The resin may then be cured.

Any suitable type of resin may be used. For example, epoxy resin, vinyl ester resin, polyester resin and others may be used.

Once the replacement bushing 50 is fixed to the blade root 16, a fastener such a stud may be introduced therein.

This method may be used to replace one or more bushings. It may be possible to replace a single bushing each time. It may also be possible to replace more than one bushing each time. For example, two bushings are being replaced at the same time in figure 4. This may speed up the process of repairing the end portion of the blade root.

In a further aspect, an assembly (e.g. a replacement assembly) for installing a bushing in a root of a wind turbine blade (e.g. replacing a bushing of the root of the wind turbine) is provided. The assembly comprises a bushing wrapped in a reinforcement fabric, a support comprising a through hole, and an alignment pin configured to be inserted in the through hole of the support and in the bushing such that the bushing is centered in a bushing hole.

The details and explanations of the previous method may be applied to this replacement assembly, and *vice versa.* For example, the support may comprise a plurality of holes, e.g. the support 64 may comprise at least a second through hole configured to align with a neighboring bushing or neighboring bushing hole 51.

The assembly may comprise a plurality of alignment pins. The replacement assembly may comprise one or more fasteners such as nuts 68 for fastening the pins to support 64.

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim and shall not be construed as limiting the scope of the claim.

## Claims

1. A method (40) for installing a bushing (50) in a root (16) of a wind turbine blade (10), the method (40) comprising:
providing (41) a bushing hole (51) in the root (16) of the wind turbine blade (10), the bushing hole (51) extending in a longitudinal direction (11) and having an open end (53) and a closed end (54);
inserting (42) a bushing (50) in the bushing hole (51), wherein
the bushing (50) has a receiving end (56) for receiving a fastener and a tip end (57), the bushing (50) is wrapped in a reinforcement fabric (52) and the bushing (50) is closed at or near the tip end (57);
creating (43) a vacuum in the bushing hole (51); and
infusing (44) the reinforcement fabric (52) with resin and curing the resin.

2. The method of claim 1, wherein providing (41) the bushing hole (51) comprises drilling out a previous bushing.

3. The method of any of claims 1-2, wherein a sleeve of the bushing (50) is open at the tip end (57), and the bushing (50) further comprises a stopper (59) to close the tip end (57).

4. The method of claim 3, wherein the stopper (59) is made of, or comprises, rubber or foam.

5. The method of any of claims 1-4, wherein the reinforcement fabric (52) is or comprises fiberglass.

6. The method of any of claims 1-5, wherein creating (43) the vacuum in the bushing hole (51) comprises providing a channel (63) from an outside of the wind turbine blade (10) to the bushing hole (51).

7. The method of claim 6, wherein the channel (63) extends between an outside of the wind turbine blade (10) to a portion of the bushing hole (51) at or near the closed end of the bushing hole (54).

8. The method of claims 6 or 7, wherein the channel (63) extends substantially transverse to the longitudinal direction (11).

9. The method of any of claims 1-8, wherein the bushing (50) comprises a tip centering element (58) connected to the tip end of the bushing (57) for centering a tip end portion of the bushing (50) in the bushing hole (51).

10. The method of claim 9, wherein the tip centering element (58) comprises a plug (60) arranged within the bushing (50) and a circumferential flange (62) outside of the bushing (50), optionally wherein the circumferential flange (62) comprises a hole and/or a recess for allowing a flow of resin.

11. The method of any of claims 1 - 10, further comprising:
connecting a support (64) at the root (16) of the wind turbine blade (10), particularly at an end face of the root (16) of the wind turbine blade (10); and
coupling the bushing (50) to the support (64).

12. The method of claim 11, wherein the support (64) comprises a through hole for receiving an alignment pin (65), and wherein the alignment pin (65) is introduced into the bushing (50) for centering the bushing (50) in the bushing hole (51).

13. The method of claim 12, wherein the support (64) comprises a plurality of through holes which are arranged to align with multiple bushings of the wind turbine blade (10).

14. An assembly for installing a bushing (50) in a root (16) of a wind turbine blade (10), the assembly comprising:
a bushing (50) wrapped in a reinforcement fabric (52);
a support (64) comprising a through hole; and
an alignment pin (65) configured to be inserted in the through hole and in the bushing (50) such that the bushing (50) is centered in a bushing hole.

15. The assembly of claim 14, wherein the support (64) comprises at least a second through hole, and wherein the second through hole is configured to align with a neighboring bushing or neighboring bushing hole.
